(19) Europäisches Patentamt
European Patent Office
Office européen des brevets

(11) **EP 1 040 611 B1**

(12) **EUROPEAN PATENT SPECIFICATION**

(45) Date of publication and mention
of the grant of the patent:
**05.06.2002   Bulletin 2002/23**

(51) Int Cl.⁷: **H04L 1/00**

(86) International application number:
**PCT/US98/26421**

(21) Application number: **98967000.5**

(22) Date of filing: **11.12.1998**

(87) International publication number:
**WO 99/30462 (17.06.1999 Gazette 1999/24)**

(54) **A FORWARD ERROR CORRECTION SYSTEM FOR PACKET BASED REAL-TIME MEDIA**

EIN VORWÄRTSFEHLERKORREKTIONSSYSTEM FÜR PACKETBASIERTE ECHTZEITMEDIEN

SYSTEME DE CORRECTION AVAL DES ERREURS POUR MEDIA EN TEMPS REEL A BASE DE PAQUETS

(84) Designated Contracting States:
**AT BE CH DE DK ES FI FR GB IT LI NL SE**

(30) Priority: **12.12.1997   US 989483**
**12.12.1997   US 989616**

(43) Date of publication of application:
**04.10.2000   Bulletin 2000/40**

(73) Proprietor: **3Com Corporation**
**Rolling Meadows, IL 60008 (US)**

(72) Inventors:
• **SCHUSTER, Guido, M.**
**Des Plaines, IL 60016 (US)**
• **MAHLER, Jerry, J.**
**Prospect Heights, IL 60070 (US)**
• **SIDHU, Ikhlaq, S.**
**Vernon Hills, IL 60061 (US)**
• **BORELLA, Michael, S.**
**Naperville, IL 60563 (US)**

(74) Representative: **Dixon, Philip Matthew**
**Frank B. Dehn & Co.**
**179 Queen Victoria Street**
**London EC4V 4EL (GB)**

(56) References cited:
**WO-A-97/38549          US-A- 5 608 738**

• **AGHADAVOODI JOLFAEI M ET AL: "IMPROVED SELECTIVE REPEAT ARQ SCHEMES FOR DATA COMMUNICATIONS" PROCEEDINGS OF THE VEHICULAR TECHNOLOGY CONFERENCE, STOCKHOLM, JUNE 8 - 10, 1994, vol. 3, no. CONF. 44, 8 June 1994 (1994-06-08), pages 1407-1411, XP000497652 INSTITUTE OF ELECTRICAL AND ELECTRONICS ENGINEERS**
• **MCAULEY A J: "RELIABLE BROADBAND COMMUNICATION USING A BURST ERASURE CORRECTING CODE" COMPUTER COMMUNICATIONS REVIEW, vol. 20, no. 4, 1 September 1990 (1990-09-01), pages 297-306, XP000168063**

**Description**

**BACKGROUND OF THE INVENTION**

**1. Field of the Invention**

The present invention relates to packet switched telecommunications networks and more particularly to a system for correcting loss of data packets in such a network.

**2. Description of the Related Art**

In a packet switched network, a message to be sent is divided into blocks, or data packets, of fixed or variable length. The packets are then sent individually over the network through multiple locations and then reassembled at a final location before being delivered to a user at a receiving end. To ensure proper transmission and reassembly of the blocks of data at the receiving end, various control data, such as sequence and verification information, is typically appended to each packet in the form of a packet header. At the receiving end, the packets are then reassembled and transmitted to an end user in a format compatible with the user's equipment.

A variety of packet switching protocols are available, and these protocols range in degree of efficiency and reliability. Those skilled in the art are familiar, for instance, with the TCP/IP suite of protocols, which is used to manage transmission of packets throughout the Internet. Two of the protocols within the TCP/IP suite, as examples, are TCP and UDP.

TCP is a reliable connection-oriented protocol, which includes intelligence necessary to confirm successful transmission between sending and receiving ends in the network. According to TCP. each packet is marked in its header with a sequence number to allow the receiving end to properly reassemble the packets into the origmal message. The receiving end is then typically configured to acknowledge receipt of packets and expressly request the sending end to re-transmit any lost packets. UDP, in contrast, is an unreliable connectionless protocol, which facilitates sending and receiving of packets but does not include any intelligence to establish that a packet successfully reached its destination.

In the Internet, loss of entire packets has been found to occur at a rate of over 20% when the network is very congested. Typically, this packet loss occurs one packet at a time. However, at times, multiple sequential packets in a row may be lost. In either case, as those skilled in the art will appreciate, a connection-oriented protocol such as TCP introduces delay into packet transmission, due to its need to confirm successful transmission and to request retransmission of these lost packets. While this delay may not be a significant problem in the transmission of pure data signals (such as an e-mail message), the delay can unacceptably disrupt the transmission of real-time media signals (such as digitized voice, video or audio).

Carle et al., International Publication No. WO 97/38549, discloses a method and apparatus for error control in an Asynchronous Transfer Mode (ATM) network, a fast packet switched network that use short packets of fixed size called cells. For each frame of data cells $D_1 ... D_m$, a forward error code consisting of redundancy cells $R_1 ... R_h$, is generated using a double matrix interleaving XOR scheme. The cells of each CPCS-PDU (Protocol Data Unit of the Common Part Convergence Sublayer of ATM Adaptation Layer 5) are arranged to include cells representing user data for frame i and cells representing the forward error correction code for frame i-1.

Matshushita, U.S. Patent No. 5,608,738, discloses a method of forming m forward error correction code packets from n data packets, by using one or more error correction frames as intermediate data structures. After the m forward error correction code packets are created, they are transmitted sequentially with the n data packets.

Therefore, a need exists for an improved system of responding to and correcting packet loss errors without introducing significant transmission delays.

**SUMMARY OF THE INVENTION**

The present invention provides a computationally simple yet powerful system for handling packet loss that may arise in the communication of real time media signals, such as digitized voice, video or audio, in a packet switched network. According to one aspect, an encoder at the sending end derives p redundancy blocks from each group of a k payload blocks and concatenates the redundancy blocks, respectively, with payload blocks in the next group of k payload blocks. According to a further aspect, the invention generates and appends to each of a series of payload packets a forward error correction code that is defined by taking the XOR sum of a predetermined number of preceding payload packets. In this way, a receiving end may extract lost payload from the redundant error correction codes carried by succeeding packets and may correct for the loss of multiple packets in a row.

Beneficially, regardless of the number of packets in a row to be recovered by this correction scheme, the size of the forward error correction code employed by the present invention is of the same order as thepayload itself. The present invention does not increase the packet rate and may perform its function without introducing significant delay into the transmission process.

These as well as other advantages of the present invention will become apparent to those of ordinary skill in the art by reading the following detailed description, with appropriate reference to the accompanying drawings.

## BRIEF DESCRIPTION OF THE DRAWINGS

A preferred embodiment of the present invention is described herein with reference to the drawings, in which:

Figure 1 depicts a payload data stream divided into payload packets PL[k];
Figure 2 depicts an encoder operating in accordance with a preferred embodiment of the present invention;
Figure 3 depicts a packet encoded in accordance with a preferred embodiment of the present invention;
Figure 4 depicts a decoder operating in accordance with a preferred embodiment of the present invention;
Figure 5 depicts an output data stream encoded in accordance with a preferred embodiment of the present invention, including packets of the form P[k] = {PL[k], FEC[k]};
Figure 6 depicts several stages of an encoder operating in a preferred embodiment of the present invention;
Figure 7 depicts a packet encoded in accordance with a preferred embodiment of the present invention;
Figure 8 depicts a link list compiled by a decoder operating in accordance with a preferred embodiment of the present invention;
Figure 9 depicts the analysis steps performed by a decoder operating in accordance with a preferred embodiment of the present invention; and
Figure 10 lists the steps depicted in Figure 9.

## DETAILED DESCRIPTION OF THE PREFERRED EMBODIMENT

The present invention provides an improved system for communicating substantially real time media signals through an unreliable digital transmission channel. The invention may find particular use for transmission of digitized video or audio (including, for instance, voice) signals over the Internet. In the preferred embodiment, the invention employs a computationally simple error correction scheme that enables the recovery of lost data packets within specified limits, while beneficially adding very little delay in transmission time.

For purposes of illustration, the following description will assume that an audio or video signal has been converted into a digital data stream and is to be transmitted in a network from a first node to a second node. It will be appreciated, of course, that the invention is not restricted to use in a traditional network configuration but may extend to any communication path through which a sequence of packets are transmitted, including, for instance, a direct path. In the preferred embodiment, however, the signal at issue is to be transmitted between nodes of a network such as the Internet.

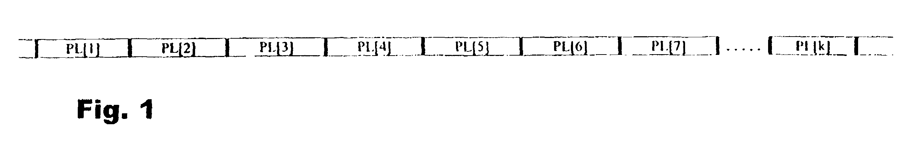

The description will further assume by way of example that the digital data stream, or payload, has been divided into a sequence of frames or payload packets, PL[1], PL[2], PL[3], PL[4], PL[5], PL[6], ..., PL[k]. A source data stream divided into these packets is illustrated for example in Figure 1. In this example, each of these payload packets consists of a set number of bytes or bits and preferably represents a portion of a signal to be transmitted through a network.

This description additionally assumes that the packets will be transmitted in a network according to a packet switching protocol that employs a bit-wise or other high resolution verification scheme such as a checksum or parity bit. Therefore, it will be assumed that a technique is in place to respond to loss of some portion of a successfully transmitted packet. Remaining at issue, however, is how to correct for loss of one or more entire packets.

As discussed in the Background section above, the TCP protocol offers one method for responding to loss of packets in a digital transmission network. According to TCP, the receiving node may be configured to acknowledge receipt of packets and expressly request the transmitting node to retransmit any lost packets. This request and retransmission system is generally accurate. However, as noted above, the system is not well suited for use in the context of real-time media transmissions, because the transmission of such signals is very sensitive to the delay introduced by retransmission requests.

Rather than employing a request and retransmission system, greater efficiency in packet loss correction may be achieved by transmitting a correction code of some sort concurrently with the payload data, thereby providing the receiving end with sufficient information to recover lost packets. Several error correction code mechanisms are available for this purpose. These mechanisms include, for instance, interleaving and block coding.

Interleaving is commonly used in wireless communications, providing an effective method to combat error bursts that occur on a fading channel. Interleaving generally calls for spreading the bits of each codeword (or payload packet) apart from each other so they experience independent fading and so that the original data may be more readily recovered.

Block coding, in turn, calls for mapping a frame of binary source data into a coded block of data that includes a set of redundant parity symbols. By conventional terminology, a block coder typically converts a group of k payload units (such as bytes or bits) into a larger group of n units by adding or appending p = n - k parity units or forward error correction (FEC) codes to the group. Each parity packet is generated through a predetermined coding technique based on all or some subset of the k payload units. One of the simplest forms of a block code is a repetition code, in which the binary source data is repeated as a set of parity bits. One of the more popular but complex block codes is the Reed-Solomon (RS) class of codes over the $2^8$ Galois field. These codes are optimal in their ability to correct erased bytes. For example, provided that 8 bytes are protected with 3 parity bytes (a total of 11 bytes), any three bytes can be lost, and the original 8 bytes may still be recovered.

Unfortunately, however, the addition of redundant parity packets gives rise to increased complexity and delays in transmission. In a packet switched network. routers route packets based on information contained in the packet headers. Therefore, the amount of work performed by a packet router generally relates directly to the number of packets being routed. Because each packet, whether payload or parity, contains its own header, an increase in packet rate consequently increases the burden on network routers and could delay transmission time or, in theory, cause a network to fail.

Adding separate parity packets to the transmission sequence is a particular waste of resources when done in the context of some of the more common real-time media transmission protocols, because many of the existing protocols add substantial overhead to each packet. For instance, the G.723.1 voice coder provides 24 bytes of payload every 30 milliseconds, but RTP/UDP/IP adds a 50 byte header to each payload packet. A parity block destined for the same receiving end as an adjacent payload block would have a header almost identical to the header of the payload block. Yet the parity packet would still require the full 44 bytes of overhead, resulting in a waste of bandwidth. As this example illustrates, traditional block coding techniques are therefore not well suited for correcting packet loss in real time media transmissions.

To avoid an increase in packet rate, another technique for providing parity information is to *append* redundant parity information to existing payload packets. For instance, as an offshoot of traditional repetition codes, the transmitting node may append to each payload packet redundant copies of the preceding *n* number of payload packets. In this way, the receiving end may readily recover a lost packet PL[k] from one of the *n* subsequent packets PL[k+1] ... PL[k+*n*]. For instance, with *n*=2, payload packets PL[k-1] and PL[k-2] would be redundantly appended to and transmitted together with payload packet PL[k], providing the following transmission packets P[k], for example:

$$P[1] = \{ PL[1], PL[0], PL[-1] \}$$

$$P[2] = \{ PL[2], PL[1], PL[0] \}$$

$$P[3] = \{ PL[3], PL[2], PL[1] \}$$

$$P[4] = \{ PL[4], PL[3], PL[2] \}$$

$$P[5] = \{ PL[5], PL[4], PL[3] \}$$

$$P[6] = \{ PL[6], PL[5], PL[4] \}$$

$$P[7] = \{ PL[7], PL[6], PL[5] \}$$

$$P[8] = \{ PL[8], PL[7], PL[6] \}$$

$$P[9] = \{ PL[9], PL[8], PL[7] \}$$

$$* * *$$

$$P[k] = \{ PL[k], PL[k-1], PL[k-2]\}$$

With this scheme, in the event a payload packet is lost in transmission, the receiving end may simply extract a redundant copy of the payload from one of the $n$ subsequent data packets.

By appending $n$ preceding payload packets to each current data packet P[k], it becomes possible to recover $n$ lost packets in a row without having to request retransmission. As more preceding packets are concatenated with each current packet, the network can tolerate a higher rate of packet loss. Additionally, this method will not affect the packet rate or routing rate, since, as noted above, the routing rate is concerned principally with the header information in a given packet, rather than with the size of each packet. Unfortunately, however, by concatenating multiple payload packets, this method necessarily and substantially increases the data rate. For instance, to be able to correct for two lost packets in a row ($n$=2) this method nearly triples the size of every packet. Therefore, this method is also not desirable.

Instead, the present invention beneficially provides a suitable and less costly scheme of correcting for packet loss, adding very little delay to transmission time. The invention preferably employs a coding technique in which parity bits associated with current packets are piggy-backed onto future packets. Rather than concatenating multiple previous payload packets with each current payload packet (and thus greatly raising the data rate), the preferred embodiment of the present invention calls for concatenating a single forward error correction (FEC) code (block code, or redundancy block) with specific payload packets or with each payload packet in a way that enables the recovery of multiple lost packets in a row.

## 1. Concatenated Parity Blocks

According to a preferred embodiment of the present invention, as a sequence of payload blocks is being transmitted, every k payload blocks in the sequence are fed through a block coder to create p = n - k forward error correction (FEC) codes or redundancy blocks, where $p \leq k$. (As shown by way of example below, p could he 1: however, this description may refer to p in plural for sake of illustration.) These p redundancy blocks are then concatenated respectively with the next p payload blocks being transmitted. In turn, at the receiving end, if a packet is lost, the associated payload may be extracted from the redundancy blocks carried by the appropriate packets.

The present invention may employ substantially any block coder now known or later developed in order to create the required p redundancy blocks. Of course, the choice of block coder, including the choice of the (n, k) values used by the coder, may depend on a number of factors, including the efficiency required for the specified application. In the preferred embodiment, for transmission of real-time media signals over the Internet, the invention employs the well known Reed-Solomon (RS) class of codes over the $2^8$ Galois field. Also referred to as RS erasure codes, these codes are optimal in their ability to correct erased bytes. For example, provided that 8 bytes are protected with 3 parity bytes (a total of 11 bytes) any three bytes can be lost and the original 8 bytes may still be recovered.

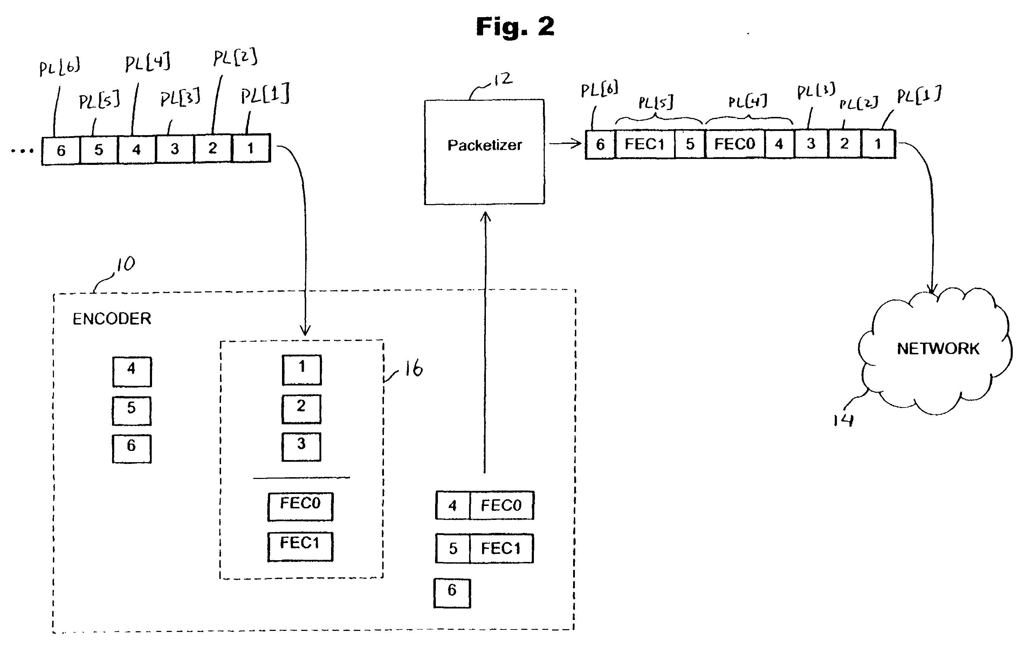

Figure 2 illustrates by way of example an encoder 10 operating in accordance with the present invention. In the example shown, a stream of fixed length packets or payload blocks arrives. The first six of these payload blocks, PL[1] through PL[6], are shown. For purposes of this example, the encoder employed by the invention is an RS block coder having (n, k) values of (5, 3). Thus, for every three payload blocks in the incoming sequence, the coder derives two FEC codes or redundancy blocks, FEC0 and FEC1. According to the invention, the encoder then appends theses redundancy blocks, respectively, to the next two payload blocks, which are the first two payload blocks in the next group of three.

Referring to Figure 2, as each of the first three payload blocks, PL[1], PL[2] and PL[3], arrives, encoder 10 writes copies of these payload blocks into memory for use in creating the required redundancy blocks. The encoder then forwards each of these three payload blocks to a packetizer 12, which adds header information and passes resulting packets, P[1], P[2] and P[3], along for transmission to the network 14. (For purposes of example, Figure 2 does not show the header information or other overhead information included with these output packets.) Because these are the first three payload blocks, they are transmitted without any added redundancy blocks.

Using the copies of payload blocks PL[1], PL[2] and PL[3] that it stored in memory, the encoder then derives two redundancy blocks, FEC0 and FEC1, as indicated at section 14 in Figure 2. In particular, the RS block coder operates symbol-wise (for example, byte-wise) on the payload symbols to create corresponding bits of the FEC symbols. The left most symbol of each of the payload blocks PL[1], PL[2] and PL[3] is used to derive the left most symbols of the redundancy blocks, the next symbol of each of the payload blocks PL[1], PL[2] and PL[3] is used to derive the next most symbols of the redundancy blocks, and so forth. As a result, the size of the redundancy blocks employed by the present invention is of the same order as that of the payload blocks with which they will be concatenated.

After generating redundancy blocks FEC0 and FEC1, the encoder preferably purges payload blocks PL[1], PL[2] and PL[3], writes copies of the next three payload blocks, PL[4], PL[5] and PL[6], to memory, and concatenates with payload blocks PL[4] and PL[5], respectively, the two redundancy blocks that it derived from payload blocks PL[1], PL[2] and PL[3]. To continue steady transmission, the encoder then passes the concatenated symbols {PL[4], FEC0} and {PL[5], FEC1} as well as payload block PL[6] to the packetizer 12 to generate packets P[4], P[5] and [P6] for transmission to the network.

While Figure 1 shows only the first six payload blocks and resulting packets, it will be appreciated that this process continues as long as a payload stream continues to arrive at the encoder. Thus, using a block coder with (n, k) values of (5, 3), the first two packets in every group of three packets transmitted to the network will each preferably include a redundancy block derived from the payload blocks in the previous three packets.

Of course, it will also be appreciated that the present invention is not restricted to appending the redundancy blocks specifically to the next payload packets following the group from which the redundancy blocks were derived, but other arrangements may be used. For instance, using a (5, 3) block coder as discussed above, the two redundancy blocks FEC0 and FEC1 derived from payload blocks PL[i], PL[i+1] and PL[i+2] could regularly be concatenated, respectively, with PL[i+4] and PL[i+5] rather than with PL[i+3] and PL[i+4].

i Because an encoder operating according to the preferred embodiment of the present invention is an RS block coder, the invention presumes that the payload blocks being combined are all of the same length (for instance, the same number of bits). With a slight adjustment, however, the invention will work equally well in a network of variable length packets (and/or fixed length packets). Provided with payload blocks of various lengths, the invention contemplates padding the shorter payload blocks in each group of k payload blocks (every three payload blocks in the above example) with zeros, so that all k blocks are the same length. For instance, with a (5, 3) block coder, if the first two of three incoming payload blocks are 16 bits long but the third is 24 bits long, the encoder will pad the first two blocks with 8 zero bits so that all three blocks are 24 bits long. The encoder will then derive the necessary redundancy blocks FEC0 and FEC1, each of which, in this example, will also be 24 bits long.

In order to conserve bandwidth, the encoder of the present invention then preferably strips payload blocks of any padded zeros before passing the blocks to the packetizer for packetizing and transmission. At the same time, however, in order to facilitate recovery of lost packets (i.e., decoding) at the receiving end, the encoder preferably concatenates with each payload block an indication of how long the payload block needs to be for decoding. Additionally, if a redundancy block is to be included in a packet, the encoder of the present invention preferably includes in the concatenated symbol an indication of how long the redundancy block is, in order to indicate where the redundancy block ends. Thus, for instance, in the above example, the encoder preferably adds to the symbol extra bits indicating that the payload block needs to be 24 bits long for decoding, and the encoder adds to the symbol extra bits indicating that the redundancy block is 24 bits long.

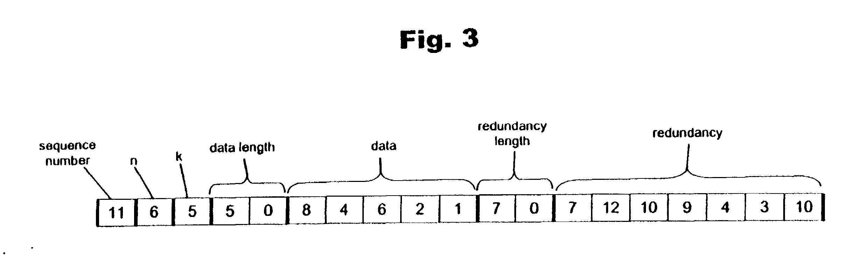

Consequently, to facilitate decoding in the preferred embodiment, a packet that is transmitted according to the present invention preferably includes indications of the sequence number or packet number, the (n, k) values, the payload/data length, the payload/data block, the redundancy block length (if any) and a redundancy block (if any). Figure 3 illustrates an example of a packet containing this information, where the encoder employs a block coder using (n, k) values (6, 5) (*i.e.*, p=1), and where a redundancy block (FEC) has been concatenated with a payload block. Alternatively, it will be appreciated that the (n, k) values could be agreed upon in advance so that the values of n and k need not he included in each packet header.

In most cases, the packets of information encoded according to the present invention are successfully transmitted through a network from the sending end to a receiving end. As discussed above, however, a number of these packets may be lost along the way and never make it to the receiving end. In the Internet, for instance, it is normal to lose 3% to 5%, and even up to 20%, of packets. Therefore, at the receiving end, a decoder is should be in place to recover missing packets.

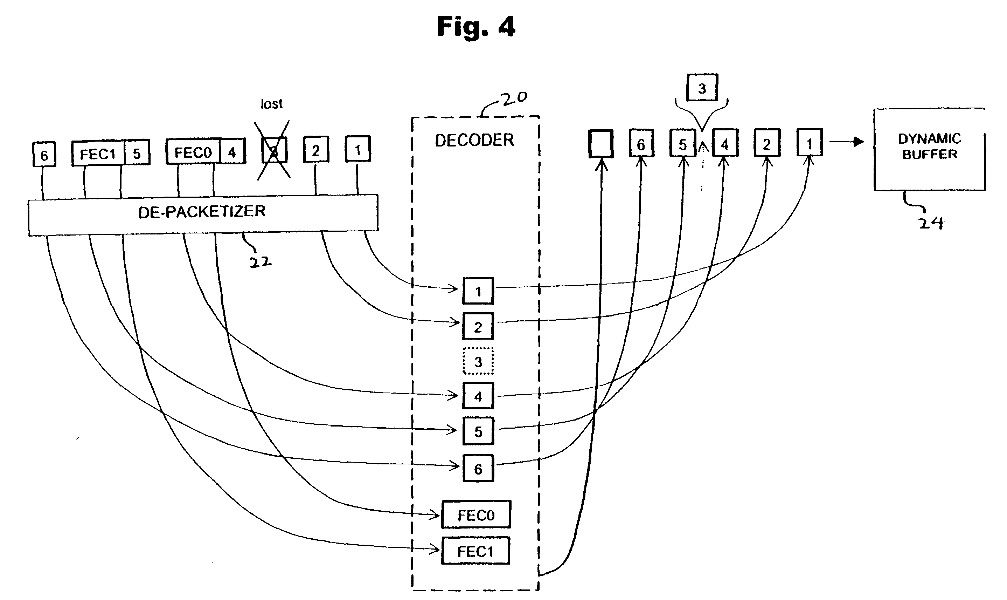

Figure 4 illustrates a decoder 20 operating in accordance with a preferred embodiment of the invention. As shown in Figure 4, a stream of packets arrives at the receiving end. These packets are illustrated arriving in sequential order. However, it will be appreciated that the present invention is not limited to sequential packet transmission. Rather, depending on the packet switching protocol in use, these packets may arrive in sequential order or out of order. A packet switching protocol such as ATM, for instance, transmits packets in sequence. However, in other transmission systems, sequentially numbered packets might be routed differently through a network and therefore do not arrive at the receiving end in their original sequence.

As shown in the example of Figure 4, all of the packets P[1] through P[6] have arrived successfully at the receiving end except for packet P[3]. According to the present invention, each of these packets is parsed by a de-packetizer 22 to remove payload or redundancy blocks from packet header information. Those payload blocks that arrived successfully are preferably forwarded directly to a dynamic buffer 24, which serves to put the payload blocks in proper sequence for receipt by an end user.

Additionally, the parsed payload blocks and redundancy blocks are stored as necessary in memory, with memory space preferably allocated according to the payload length and redundancy length that were indicated in the packet. To facilitate decoding and recovery of any lost packets, the number of blocks stored in memory may depend on the (n, k) values of the block coder originally used for encoding. In the example shown, packet P[3] (and therefore payload block PL[3]) is missing. Further, assume that the (n, k) values of the encoder are (5, 3). Accordingly, the decoder 20 stores in memory at least payload blocks PL[1] and PL[2] and redundancy blocks FEC0 and FEC1. Decoder 20 need not store payload blocks PL[4], PL[5] and PL[6] in memory in this cxample, because no payload in that group of three (k) is missing. Nevertheless, to illustrate context, packets P[4], P[5] and P[6] are depicted in the decoder.

In the preferred embodiment, every time decoder 20 receives new data, it determines whether the new data can help to recover missing information. Thus, in the example shown in Figure 4, after decoder 20 has received payload blocks PL[1], PL[2] and PL[4] and redundancy block FEC0 (which was transmitted with payload block PL[4]), it recognizes that payload block PL[3] is missing. Given the (5, 3) RS block coder used in this example, decoder 20 can recover the missing payload block PL[3]. In particular, decoder 20 may employ a (5, 3) RS decoder to derive PL[3], given PL[1], PL[2] and FEC0.

Once decoder 20 recovers the missing payload block PL[3], it passes PL[3] to the dynamic buffer 24. Dynamic buffer 24 in turn places PL[3] in sequential order between payload blocks PL[2] and PL[4] and forwards the ordered payload to the end user.

As those skilled in the art will appreciate from the foregoing, in the example shown, if any two of three sequential payload blocks are then lost, the RS block decoder will be able to recover the lost data as long as the necessary redundancy block(s) arrive. In particular, in the example, if up to two of packets P[1], P[2] and P[3] are lost, decoder 20 can recover the lost payload as long as packets P[4] and P[5], and therefore redundancy blocks FEC0 and FEC1, arrive successfully. Note that if only one packet P[1], P[2] or P[3] was lost, only one packet P[4] or P[5] needs to arrive, since one FEC block is enough to reconstruct one lost data block.

The present invention thus conveniently enables the correction of burst errors (the loss of multiple sequential packets in a row), as long as the required redundancy blocks arrive successfully. In this regard, it is further contemplated that a still more robust solution to packet loss may be achieved by widely distributing the redundancy blocks, or portions of the redundancy blocks, within the k packets following those from which the redundancy blocks were derived, rather than placing the redundancy blocks in adjacent packets. By doing so, there may be less chance that the redundancy blocks themselves will be lost as a result of a burst error.

As noted above, by selecting desired (n, k) values, it is possible to vary the efficiency of the correction mechanism provided by the present invention. In this regard, it will be understood that the choice of these values is based on balance between delay and burst recovery. As higher values of p are used, the decoder will be able to recover more packets lost at once. At the same time, as higher values of k are used, the decoder will have to wait longer to recover lost packets, which, as explained above, would be undesirable for transmission of real-time media signals such as voice, video or audio.

For instance, using (n, k) values of (10, 9), an encoder would derive one redundancy block from every nine payload blocks and would include that redundancy block in one of the next nine packets. If exactly one of nine sequential packets is then lost in transmission, the lost payload can be recovered as described above. If, however, more than one of nine packets is lost in transmission, the one redundant block would not enable recovery of all of the lost packets.

Using (n, k) values of (10, 8) instead, the encoder of the preferred embodiment would create two RS-coded redundancy blocks from every eight payload blocks and would include those redundancy blocks in two of the next eight payload blocks. With this setting, it is possible according to the present invention to lose up to any two of eight sequential packets and to recover those lost packets using the two RS-coded redundant blocks.

For transmissions of coded voice signals over the Internet, an RS-coder using (n, k) values of (4, 3) is preferred. With these values, the transmission system can survive a loss of one packet in every four, which would be a 25% loss rate.

In contrast, for transmissions of coded video signals over the Internet, an RS-coder using (n, k) values of (18, 9) is preferred. These values provide nine redundancy blocks and therefore allow for recovery from a loss of nine packets out of every eighteen. These (n, k) values would work particularly well in the context of the H.263 low bit rate video coding standard currently recommended by the International Telecommunications Union, because the H.263 standard calls for dividing a single video frame into 9 pieces or packets. Therefore, each video frame could be separately corrected according to the present invention as long as the next video frame arrives completely.

While an encoder or decoder operating in accordance with the present invention may take any of a variety of forms (such as hardware, software or firmware), both the encoding and decoding functions are preferably carried out by a computer processor operating a set of machine language instructions that are stored in a memory.

As the foregoing illustrates, the present invention provides a computationally simple mechanism for encoding and decoding a sequence of packets in order to recover lost packets. Beneficially, the invention accomplishes this function without increasing packet rate and without substantially increasing the data rate of transmission beyond the single FEC block (and trivial amount of other overhead) added to specified packets. As the value of p is increased, the present invention conveniently enables the recovery from larger burst errors. The present invention thus provides a powerful mechanism for reducing the effect of packet loss.

## 2. Concatenated XOR Parity Blocks

According to another preferred embodiment of the present invention, a single FEC block is appended to each payload packet. This single FEC block is about the same size as the payload packet and is computed by taking the XOR (exclusive-or, or $\oplus$) product of a predetermined number $w$ of preceding payload packets, where w is preferably more than 1. In turn, at the receiving end, if a packet is lost, the associated payload may be extracted from the XOR sum carried by one or more subsequent data packets.

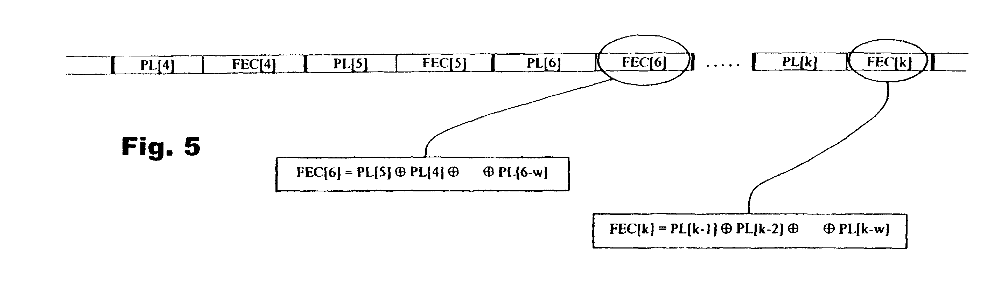

In general, the present invention therefore calls for building a forward error correction code FEC[k] for each payload packet P[k], where FEC[k] = PL[k-1] $\oplus$ PL[k-2] $\oplus$, ..., $\oplus$ PL[k-$w$], and where w is a positive integer generally greater than 1. This FEC[k] is then piggy-backed onto the payload PL[j], where j > k. The resulting packet P[k] is therefore the concatenation of the payload and the FEC: P[k] = {PL[k], FEC[k]}. Figure 5 illustrates a data stream containing a sequence of packets concatenated with their associated forward error correction codes in this fashion.

The predetermined number $w$ defines a sliding window over which the XOR operation is taken and, as a result, defines the length of a burst error, or number of lost packets in a row, from which the system is able to recover. As a block coder that adds a single redundancy block to each data packet based on the previous w data packets, the present invention may be understood to employ (n, k) values of

$$k = w,$$

and

$$n = k + 1.$$

Thus, for instance, if the sliding window w is 5, then the (n, k) values of the XOR block coder according to the present invention are (6, 5).

By repeatedly generating block codes according to a sliding window over a sequence of packets, the packet data is used in several block codes rather than in only a single block code. Consequently, the present invention provides a high order redundancy and enables the recovery of multiple lost packets in a row, while requiring only a single redundancy block per packet.

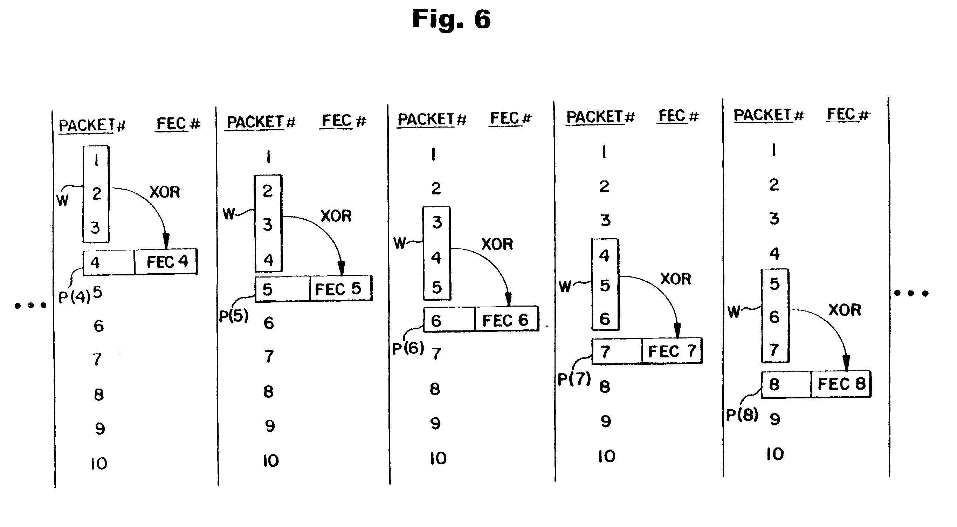

To better understand the operation of this sliding window, Figure 6 depicts several stages of an encoder operating in a preferred embodiment of the invention. Figure 6 assumes that 10 packets (numbered 1-10) are to be transmitted in a network and that the window size $w$ is 3. In the first stage shown, the window $w$ covers payload packets PL[1] - PL[3], so that the encoder computes FEC[4] = PL[1] $\oplus$ PL[2] $\oplus$ PL[3]. The encoder then appends this FEC[4] redundancy block to payload packet PL[4] and outputs the resulting packet P[4] = {PL[4], FEC[4]} for transmission to the receiving end. In turn, in the next stage shown, the window w covers payload packets P[2] - P[4], so that the encoder computes FEC[5] = PL[2] $\oplus$ PL[3] $\oplus$ PL[4]. The encoder then appends this FEC[5] redundancy block to payload packet PL[5] and outputs the resulting packet P[5] = {PL[5], FEC[5]} for transmission to the receiving end. As partially illustrated in the figure, this process continues as long as the sequence of payload packets continues.

The use of the XOR operation presumes that the packets being combined are of the same length (for instance, the same number of bits). The present invention, however, will work equally well in a network of variable length packets. Provided with packets of various lengths, the invention contemplates padding the shorter packets with zeros, so that all packets combined in a single XOR operation, as well as the resulting XOR sum, will be the length of the longest among them. Once the XOR coding operation is complete, the extra zeros are dropped from each padded packet. and the unpadded packet is output for transmission to the network (together with a redundancy block based on the previous w packets). In this variation, extra codes may be added to the header to indicate the lengths of the data block and the redundancy block, in order to facilitate decoding in accordance with the invention.

It should be further appreciated, of course, that the FEC contemplated by the present invention is not restricted to being equal to the above-described XOR sum, but may include other modifications as necessary. For instance, the present invention would extend to the use of an FEC that is computed by taking an XOR sum of the previous $w$ payload packets and then inverting one or more predetermined digits or cyclically shifting the code or resulting packet. Additionally, it will be understood that the above equation is set forth for purposes of illustration only and that the present invention is not necessarily limited to employing the XOR sum of 3 or more (k-1, k-2, ..., k-w) preceding payload packets; the invention may, for instance, extend to the XOR sum of only the previous two payload packets as well. Still further, it will be appreciated that the sequence illustrated in Figure 1 is shown for example only; the present invention may equally extend to separate and independent transmission of packets P[k] = {PL[k], FEC[k]} through a packet switched network.

As a general example of the encoding and decoding process contemplated by the present invention, the following illustrates the structure of a series of payload packets P[k] generated by an encoder, given payload frame PF[k] and a window $w = 3$:

$$P[1] = \{PL[1], FEC[1]\} = \{PL[1], \quad PL[0] \oplus PL[-1] \oplus PL[-2]\}$$

$$P[2] = \{PL[2], FEC[2]\} = \{PL[2], \quad PL[1] \oplus PL[0] \oplus PL[-1]\}$$

$$P[3] = \{PL[3], FEC[3]\} = \{PL[3], \quad PL[2] \oplus PL[1] \oplus PL[0]\}$$

$$P[4] = \{PL[4], FEC[4]\} = \{PL[4], \quad PL[3] \oplus PL[2] \oplus PL[1]\}$$

$$P[5] = \{PL[5], FEC[5]\} = \{PL[5], \quad PL[4] \oplus PL[3] \oplus PL[2]\}$$

$$P[6] = \{PL[6], FEC[6]\} = \{PL[6], \quad PL[5] \oplus PL[4] \oplus PL[3]\}$$

$$P[7] = \{PL[7], FEC[7]\} = \{PL[7], \quad PL[6] \oplus PL[5] \oplus PL[4]\}$$

$$P[8] = \{PL[8], FEC[8]\} = \{PL[8], \quad PL[7] \oplus PL[6] \oplus PL[5]\}$$

$$P[9] = \{PL[9], FEC[9]\} = \{PL[9], \quad PL[8] \oplus PL[7] \oplus PL[6]\}$$

$$***$$

$$P[k] = \{PL[k], FEC[k]\} = \{PL[k], \quad PL[k-1] \oplus PL[k-2] \oplus PL[k-3]\}$$

Assume that packet P[5] was lost in transmission. With the present invention, a decoder may recreate packet P[5] by using the FEC of the packets in which packet P[5] was included. In this case, since $w=3$, the three packets following packet P[5] are each based in part on the value of payload packet PL[5]. Consequently, payload packet PL[5] may be recovered by solving any of the equations defining these three packets. For instance, using packet P[8],

$$FEC[8] = PL[7] \oplus PL[6] \oplus PL[5],$$

and

$$PL[5] = FEC[8] \oplus PL[7] \oplus PL[6].$$

This example may be extended to illustrate that, provided with a window *w*=3, the present invention enables the recovery of three packets lost in a row. Assume, for instance, that packets P[4], P[5] and P[6] are lost. In order to recover the payload carried by these lost packets, the subsequent three packets, P[7], P[8] and P[9], will need to have arrived successfully. Provided with these three packets, the receiving end may first extract payload packet PL[6] from FEC[9] as follows:

$$FEC[9] = PL[8] \oplus PL[7] \oplus PL[6],$$

and

$$PL[6] = FEC[9] \oplus PL[8] \oplus PL[7].$$

Next, the receiving end may extract payload packet PL[5] from FEC[8] as follows:

$$FEC[8] = PL[7] \oplus PL[6] \oplus PL[5],$$

and

$$PL[5] = FEC[8] \oplus PL[7] \oplus PL[6].$$

Finally, the receiving end may extract payload packet PL[4] from FEC[7] as follows:

$$FEC[7] = PL[6] \oplus PL[5] \oplus PL[4],$$

and

$$PL[4] = FEC[7] \oplus PL[6] \oplus PL[5].$$

The foregoing illustrates a straightforward mechanism for recovering lost data within the present invention. This mechanism works well when the transmitted packets arrive in sequence, as would occur with the transmission of ATM cells. With packets arriving in sequence, a lost packet can be recovered as soon as the next *w* packets successfully arrive. In many transmission systems, however, sequentially numbered packets that are sent in order through a network do not arrive at the receiving end in their original sequence.

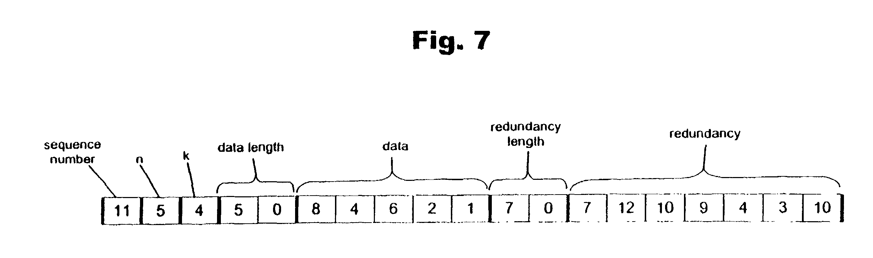

To enable more robust recovery of lost packets, a preferred embodiment of the invention preferably operates as follows. At the sending end, an encoder translates incoming data into packets, using the XOR encoding mechanism of the present invention. As described above, this XOR encoder employs a sliding window w, such that the n and k values of the block coder are (n=k+1, k=w). Each packet preferably includes an indication of the sequence number (packet number), the (n, k) values, a payload/data block and a redundancy block. Additionally, to account for possible variation in packet length, each packet also preferably includes an indication of data length and an indication of redundancy length. Figure 7 illustrates an example of a packet containing this information, where the encoder employs a sliding window w of 4 (and. therefore, k = 4).

At the receiving end, a decoder is in place to receive these packets and recover any lost packets that can be recovered. According to the preferred embodiment of the invention, as the decoder receives a packet, it stores the packet in memory, parses the packet into its components, and creates a "bubble" of information (for instance, a "c"-structure), containing the sequence number, and pointers to the data block and the redundancy block in the packet. The decoder then places the bubble into a doubly linked list by storing a pointer to the bubble. Additionally, the decoder preferably passes the data block downstream for use by other elements in the transmission system.

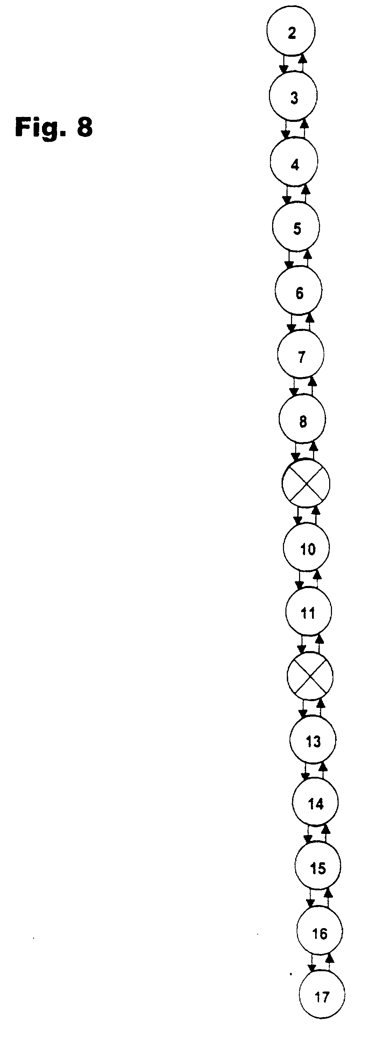

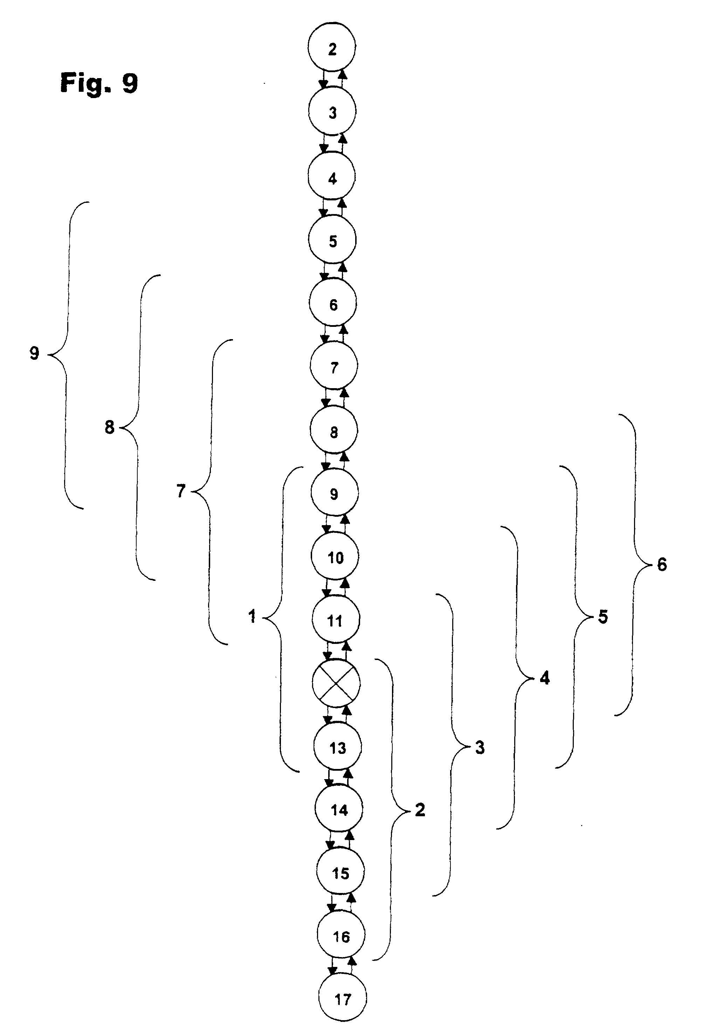

In the preferred embodiment, each time the decoder receives new information and adds a bubble to the link list, it determines whether the information in the bubble can help to recover any missing information. For example, Figure 8 illustrates a series of bubbles 2-17 compiled by a sample decoder. As shown by Figure 8, assume that bubbles 9 and 12 are missing, but the decoder has so far received packets sufficient to provide the information needed for bubbles 2-8, 10-11 and 13-17. Assume now that packet 9 arrives. The decoder receives packet 9 and inserts bubble 9 in the link list, to obtain a revised link list shown in Figure 9.

Because the sliding window *w* in this example is 4 (as established by the value of k included in each received packet), the decoder knows that, in an ordered sequence of packets, each packet is related through an XOR operation with the preceding 4 packets as well as with the following 4 packets. In the present example, therefore, the decoder knows that the information newly received from packet number 9 can help to recover lost data, if any, in bubbles 5-8 and 10-13. This range may he referred to as the relevant range with respect to newly received packet number 9. Knowing this relevant range conveniently limits the work that the decoder needs to do when it receives a new packet in order to decide whether the information can help in some way.

In the preferred embodiment, the decoder analyzes the relevant range (5-13 in this example) as follows. The decoder begins at the end of the range by considering bubbles 9-13, which may be referred to as a window of analysis. In this window of analysis, the decoder first determines whether there is exactly one data block missing in the range 9-12 that the redundancy block 13, which needs to be in the linked list, can help recover (through the XOR operation). If more than one data block is missing in the range 9-12, the decoder knows that it cannot, with the XOR operation, recover any data in the window of analysis. In that case, or in the event the decoder finds no missing data in the window of analysis, then the decoder moves the window of analysis up one notch and repeats this analysis, now for the window of analysis defined by bubbles 8-12. The decoder continues this process until it completes its analysis with the top of the window of analysis at the top of the relevant range, which is bubble 5 in this example.

If the decoder determines that exactly one data block is missing in a given window of analysis, and the last bubble in the analysis window contains a redundancy block, then the decoder may employ the XOR operation as discussed above to recover the missing data block. Once it does so, it will have received a new piece of information, namely, the recovered data block, which should give rise to a new relevant range. As a result, the decoder may jump back to a higher number bubble (i.e., down in the link list), moving the window of analysis to a higher number starting point. The decoder may then continue moving the window of analysis up the link list until the top of the window of analysis has reached the top of the original relevant range.

In this example, for instance, once the window of analysis is over bubbles 9-13, the missing data block 12 can be recovered by taking the XOR sum of data blocks 9, 10 and 11 and redundancy block 13. The decoder will therefore have the newly received information of data block 12, which gives rise to a new relevant range of 8-16 (i.e., 8-12 and 12-16). As a result, the decoder positions a new window of analysis to start over bubbles 12-16 and to move upward bubble-by-bubble as discussed above. For instance, if packet 15 had not yet arrived, but data blocks 12, 13 and 14 and redundancy block 16 had arrived, then the decoder could compute data block 15 using the XOR operation.

It will be appreciated that two window of analysis loops are thus in operation. A first window of analysis loop, or "outer loop," is operating as a result of the receipt of data block 9. A second window of analysis loop, or "inner loop," is operating as a result of the recovery of data block 12. The outer loop is geared to move a window of analysis up the link list until the decoder has completed its analysis of bubbles 5-9. The inner loop, in comparison, is geared to move a window of analysis up the link list until the decoder has completed its analysis of bubbles 8-12.

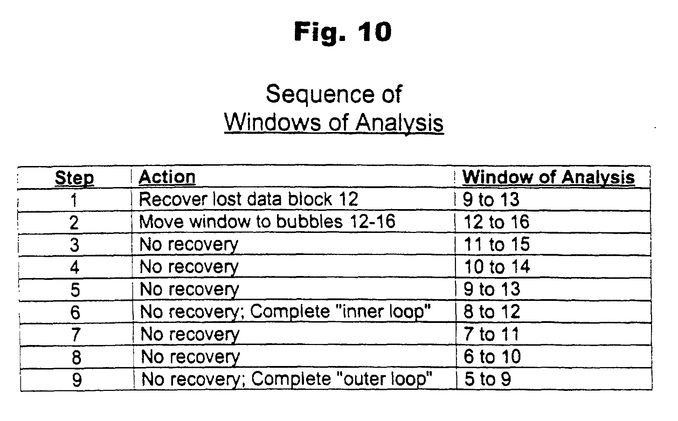

In order to avoid unnecessary repetition, a decoder operating according to the preferred embodiment of the present invention will complete the inner loop and will then continue moving up the link list to complete the outer loop, without jumping back to where it left off before it began the inner loop. Thus, in the above example, the steps performed by the decoder are illustrated by the brackets in Figure 9 and by the rows in Figure 10. As shown in these Figures, at step 1, the decoder first analyzes bubbles 9-13 and recovers lost data block 12. At step 2, the decoder therefore jumps to a window of analysis over bubbles 12-16, where the decoder recovers no new data. At steps 3 through 6. the decoder moves the window of analysis bubble-by-bubble up the link list, until it has completed the inner loop at bubbles 8-12, recovering no new data at each step.

Next, rather than recursively returning to the outer loop and repeating an analysis of bubbles 8-12, the decoder continues moving up the link list from where it left off with the inner loop, analyzing bubbles 7-11 at step 7, bubbles 6-10 at step 8, and bubbles 5-9 at step 9. In this example, the decoder does not recover any additional data along the way. After completing its analysis of bubbles 5-9, the decoder's analysis is complete, and the decoder waits for the arrival of a new packet to begin another analysis.

While an encoder or decoder operating in accordance with the present invention may take any of a variety of forms (such as hardware, software or firmware), both the encoding and decoding functions are preferably carried out by a computer processor or microprocessor operating a set of machine language instructions that are stored in a memory.

The computer processor and/or machine language instructions that carries out the encoding function according to the present invention may be referred to as a first segment of a communication apparatus, and a device that transmits the resulting encoded packets according to the present invention may be referred to as a second segment of the communication apparatus. In turn, the computer processor and/or machine language instructions that recreates a lost payload packet by extracting information from other packets may be referred to as a third segment of the communication apparatus. Alternatively, it will be appreciated that the various components required to carry out the present invention may be divided into other segments of a communication apparatus.

As the foregoing illustrates, the present invention provides a computationally simple mechanism for encoding and decoding a sequence of packets in order to recover lost packets. Beneficially, the invention accomplishes this function without increasing packet rate and without substantially increasing the data rate of transmission beyond the single FEC block (and trivial amount of other overhead) added to each payload packet. As the window size w is increased, provided with successful transmission and receipt of sufficient adjacent data blocks, the present invention conveniently enables the recovery from larger burst errors. The present invention thus provides a powerful mechanism for reducing the effect of packet loss, by establishing high order redundancy through the use of a sliding window and an efficient forward error correction code as described above.

**Claims**

1. A method for encoding packets from a sequence of payload blocks to enable recovery of lost packets in a packet switched telecommunications network in which routers route packets based on information contained in the packet headers, said sequence of payload blocks including a sequential group of $k$ payload blocks and a subsequent sequential group of payload blocks, said method **characterized by**:

    deriving $p$ redundancy blocks from said sequential group of $k$ payload blocks; and
    generating $p$ packets by a process comprising combining each of said $p$ redundancy blocks, respectively, with a payload block in said subsequent sequential group of payload blocks, whereby each one of said $p$ packets includes a payload block and one of said $p$ redundancy blocks.

2. A method as claimed in claim 1, wherein deriving $p$ redundancy blocks comprises employing a Reed-Solomon block coder.

3. A method as claimed in claim 1 or 2, wherein said subsequent sequential group of payload blocks are the $k$ payload blocks next in sequence after said sequential group of $k$ payload blocks.

4. A method as claimed in any preceding claim, wherein said payload blocks cooperatively represent a real-time media signal selected from the group consisting of audio and video.

5. A method as claimed in any preceding claim, wherein $p$=1.

6. A method as claimed in claim 5, wherein deriving a redundancy block from a sequential group of $k$ payload blocks comprises computing an XOR sum of said $k$ payload blocks.

7. A method as claimed in claim 6, wherein said subsequent sequential group of payload blocks are the $p$ payload blocks next in sequence after said sequential group of $k$ payload blocks.

8. A method as claimed in any of claims 1 to 4, further **characterized by**:

    transmitting said $p$ packets into said network, said $p$ packets corresponding in sequence to said sequence of said payload blocks.

9. An apparatus for encoding packets from a sequence of payload blocks to enable recovery of lost packets in a packet switched telecommunications network in which routers route packets based on information contained in the packet headers, said sequence of payload blocks including a sequential group of $k$ payload blocks and a subsequent sequential group of payload blocks, said apparatus having a computer processor and a memory, said apparatus **characterized by**:

    a first set of machine language instructions stored in said memory and executed by said processor for deriving $p$ redundancy blocks from said sequential group of $k$ payload blocks; and
    a second set of machine language instructions stored in said memory and executed by said processor for generating $p$ packets by a process comprising combining each of said p redundancy blocks, respectively, with a payload block in said subsequent sequential group of payload blocks, whereby each one of said $p$ packets includes a payload block and one of said $p$ redundancy blocks.

**10.** An apparatus as claimed in claim 9, wherein said first set of machine language instructions comprises a Reed-Solomon block coder.

**11.** An apparatus as claimed in claim 9 or 10, wherein said subsequent sequential group of payload blocks are the $k$ payload blocks next in sequence after said sequential group of $k$ payload blocks.

**12.** An apparatus as claimed in any of claims 9 to 11, wherein said payload blocks cooperatively represent a real-time media signal selected from the group consisting of audio and video.

**13.** An apparatus as claimed in any of claims 9 to 12, wherein $p$=1.

**14.** An apparatus as claimed in claim 13, wherein said first set of machine language instructions derives a redundancy block from a sequential group of $k$ payload blocks by computing an XOR sum of said $k$ payload blocks.

**15.** An apparatus as claimed in claim 14, wherein said subsequent sequential group of payload blocks are the $p$ payload blocks next in sequence after said sequential group of $k$ payload blocks.

**16.** An apparatus as claimed in any of claims 9 to 12, further **characterized by**:

a third set of machine language instructions stored in said memory and executed by said processor for transmitting said $p$ packets into said network, said $p$ packets corresponding in sequence to said sequence of said payload blocks.

**17.** A method for communicating a payload in a packet switched telecommunications network in which routers route packets based on information contained in the packet headers, said payload being divided into a sequence of payload blocks, PL[k-w], ..., PL[k-2], PL[k-1], PL[k], PL[k+1], ..., PL[k+u], said method **characterized by**:

for each payload block PL[i] in said sequence of payload blocks, generating a forward error correction code FEC[i] comprising the XOR sum of a predetermined number of preceding payload blocks and appending said forward error correction code FEC[i] to said payload block PL[i], said predetermined number being greater than one;
transmitting a sequence of packets P[k], P[k+1], ..., P[k+u] from a first device in said network for receipt by a second device in said network, wherein each packet P[i] in said sequence of packets includes payload block PL[i] and forward error code FEC[i].

**18.** A method as claimed in claim 17, wherein if a packet P[j] is lost in transmission, said second device recreates payload block PL[j] by a process comprising extracting information from one or more packets that follow packet P[j].

**19.** A method as claimed in claim 18, wherein said predetermined number defines a length of burst error from which said second device may recover said payload.

**20.** A method as claimed in claim 19, wherein said predetermined number is 2.

**21.** A method as claimed in claim 19, wherein said predetermined number is 3.

**22.** A method as claimed in any of claims 17 to 21, wherein said payload represents a real-time media signal.

**23.** A method as claimed in claim 22, wherein said payload represents a voice signal.

**24.** A method as claimed in any of claims 17 to 23, further **characterized by**, in order:

padding a plurality of said payload blocks, to create a plurality of padded payload blocks equal in length to each other; and
generating said forward error correction codes for said padded payload blocks.

**25.** A method as claimed in any of claims 17 to 24, further **characterized by**:

applying a sliding window along said sequence of payload blocks and, within said sliding window, generating and appending said forward error correction codes.

26. A method for recovering a lost packet in a sequence of packets transmitted in a packet switched telecommunications network in which routers route packets based on information contained in the packet headers, each packet in said sequence defining a sequence number and carrying a payload block and a redundancy block, said method **characterized by**:

(a) receiving an incoming packet of said sequence of packets;
(b) establishing a window of analysis beginning with said incoming packet and extending for a predetermined number of packets of said sequence following said incoming packet; and
(c) if only one payload block in said window of analysis has not yet been received, recovering said one payload block by taking an XOR sum of a plurality of payload blocks within said window of analysis.

27. A method as claimed in claim 26, further **characterized by**:

if all of the payload blocks in said window of analysis have been received, or if more than one of said payload blocks in said window of analysis have not been received, moving said window of analysis back by one packet so that the window of analysis beings with one packet of said sequence prior to said incoming packet and extends for said predetermined number of packets of said packet following said one packet; and
repeating step (c) of claim 26.

28. An apparatus for communicating a payload in a packet switched telecommunications network in which routers route packets based on information contained in the packet headers, said payload being divided into a sequence of payload blocks, PL[k-w], ..., PL[k-2], PL[k-1], PL[k], PL[k+1], .... PL[k+u], said apparatus having a computer processor and a memory, said apparatus **characterized by**:

a first segment for generating, for each payload block PL[i] in said sequence of payload blocks, a forward error correction code FEC[i] comprising the XOR sum of a predetermined number of preceding payload blocks and appending said forward error correction code FEC[i] to said payload block PL[i], said predetermined number being greater than one; and
a second segment for transmitting a sequence of packets P[k], P[k+1], ..., P[k+u] from a first device in said network for receipt by a second device in said network, wherein each packet P[i] in said sequence of packets includes payload block PL[i] and forward error code FEC[i].

29. An apparatus as claimed in claim 28, wherein said first segment comprises a set of machine language instructions stored in said memory and executable by said computer processor.

30. An apparatus as claimed in claim 28 or 29, further **characterized by**:

a third segment operated by said second device for recreating a lost payload block PL[j] by a process comprising extracting information from one or more other packets in said sequence of packets.

31. An apparatus as claimed in claim 30, wherein said third segment comprises a set of machine language instructions stored in said memory and executable by said computer processor.

32. An apparatus as claimed in any of claims 28 to 31, wherein said predetermined number defines a maximum number of lost payload blocks in a row that may be recovered.

33. An apparatus as claimed in any of claims 28 to 32, wherein said payload represents a real-time media signal.

34. An apparatus as claimed in claim 33, wherein said payload represents a voice signal.

**Patentansprüche**

1. Verfahren zum Codieren von Paketen aus einer Sequenz von Nutzblöcken, um eine Rückgewinnung bzw. Wiederherstellung von verlorenen Paketen in einem paketvermittelten Telekommunikationsnetzwerk zu ermöglichen, in dem Leitrechner bzw. Router Pakete basierend auf Informationen, die in den Paketköpfen enthalten sind, leiten, wobei die Folge bzw. Sequenz von Nutzblöcken eine sequentielle Gruppe von $k$ Nutzblöcken und eine nachfolgende sequentielle Gruppe von Nutzblöcken umfaßt, wobei das Verfahren **gekennzeichnet ist durch**:

Ableiten von $p$ Redundanzblöcken von der sequentiellen Gruppe von $k$ Nutzblöcken, und

Erzeugen von $p$ Paketen **durch** einen Prozeß, der ein Kombinieren jedes der $p$ Redundanzblöcke mit einem Nutzblock in der nachfolgenden sequentiellen Gruppe der Nutzblöcke umfaßt, wobei jedes der $p$ Pakete einen Nutzblock und einen der $p$ Redundanzblöcke enthält.

2. Verfahren nach Anspruch 1, bei dem der Schritt des Ableitens von $p$ Redunzanblöcken die Anwendung eines Reed-Solomon-Blockcodierers umfaßt.

3. Verfahren nach Anspruch 1 oder 2, bei dem die nachfolgende sequentielle Gruppe von Nutzblöcken die $k$ Nutzblöcke sind, die als nächste in der Reihe nach der sequentiellen Gruppe von $k$ Nutzblöcken folgen.

4. Verfahren nach einem der vorstehenden Ansprüche, bei dem die Nutzblöcke kooperativ ein Echtzeit-Mediensignal repräsentieren, das aus einer Gruppe ausgewählt ist, die aus Ton- und Bildsignalen besteht.

5. Verfahren nach einem der vorstehenden Ansprüche, bei dem p = 1 ist.

6. Verfahren nach Anspruch 5, bei dem der Schritt des Ableitens eines Redundanzblockes von einer sequentiellen Gruppe von $k$ Nutzblöcken den Schritt des Berechnens einer XOR-Summe von den $k$ Nutzblöcken umfaßt.

7. Verfahren nach Anspruch 6, bei dem die nachfolgende sequentielle Gruppe von Nutzblöcken die $p$ Nutzblöcke sind, die als nächstes in der Reihe nach der sequentiellen Gruppe von $k$ Nutzblöcke folgen.

8. Verfahren nach einem der Ansprüche 1 bis 4, das weiterhin **gekennzeichnet ist durch** den Schritt des Übertragens der p Pakete in das Netzwerk, wobei die p Pakete der Reihe nach der Sequenz bzw. Reihenfolge der Nutzblöcke entsprechen.

9. Vorrichtung zum Codieren von Paketen aus einer Sequenz von Nutzblöcken, um eine Wiederherstellung bzw. Rückgewinnung von verlorenen Paketen in einem paketvermittelten Telekommunikationsnetzwerk zu ermöglichen, in dem Leitrechner bzw. Router Pakete basierend auf Informationen leiten, die in den Paketköpfen enthalten sind, wobei die Sequenz von Nutzblöcken eine sequentielle Gruppe von $k$ Nutzblöcken und eine nachfolgende sequentielle Gruppe von Nutzblöcken enthält, und wobei die Vorrichtung einen Computerprozessor und einen Speicher aufweist, und die Vorrichtung **gekennzeichnet ist durch**:

einen ersten Satz von Maschinensprachenbefehlen, der in dem Speicher gespeichert ist und **durch** den Prozessor zur Ableitung von $p$ Redundanzblöcken von der sequentiellen Gruppe von $k$ Nutzblöcken ausgeführt wird, und

einen zweiten Satz von Maschinensprachenbefehlen, der in dem Speicher gespeichert ist und **durch** den Prozessor zur Erzeugung von $p$ Paketen **durch** einen Prozeß ausgeführt wird, der ein Kombinieren jedes der $p$ Redundanzblöcke mit einem Nutzblock in der nachfolgenden sequentiellen Gruppe von Nutzblöcken umfaßt, wobei jedes der $p$ Pakete einen Nutzblock und einen der p Redundanzblöcke enthält.

10. Vorrichtung nach Anspruch 9, bei der der erste Satz von Maschinensprachenbefehlen einen Reed-Solomon-Blockcodierer umfaßt.

11. Vorrichtung nach Anspruch 9 oder 10, bei der die nachfolgende sequentielle Gruppe von Nutzblöcken die $k$ Nutzblöcke sind, die als nächste in der Reihe nach der sequentiellen Gruppe von $k$ Nutzblöcken folgen.

12. Vorrichtung nach einem der Ansprüche 9 bis 11, bei der die Nutzblöcke kooperativ ein Echtzeitmediensignal repräsentieren, das aus einer Gruppe ausgewählt ist, die aus Ton- und Bildsignalen besteht.

13. Vorrichtung nach einem der Ansprüche 9 bis 12, bei der $p$ = 1 ist.

14. Vorrichtung nach Anspruch 13, bei der der erste Satz von Maschinensprachenbefehlen einen Redundanzblock von einer sequentiellen Gruppe von k Nutzblöcken durch Berechnen einer XOR-Summe aus den *k* Nutzblöcken ableitet.

15. Vorrichtung nach Anspruch 14, bei der die nachfolgende sequentielle Gruppe von Nutzblöcken die *p* Nutzblöcke sind, die als nächste in der Reihe nach der sequentiellen Gruppe von *k* Nutzblöcken folgen.

16. Vorrichtung nach einem der Ansprüche 9 bis 12, die weiterhin **gekennzeichnet ist durch** einen dritten Satz von Maschinensprachenbefehlen, die in dem Speicher gespeichert sind und **durch** den Prozessor zum Übertragen der *p* Pakete in das Netzwerk ausgeführt werden, wobei die *p* Pakete der Reihe nach der Sequenz der Nutzblöcke entsprechen.

17. Verfahren zum Berechnen einer Nutzlast in einem paketvermittelten Telekommunikationsnetzwerk, in dem Leitrechner Pakete basierend auf Informationen leiten, die in den Paketköpfen enthalten sind, wobei die Nutzlast in eine Sequenz von Nutzblöcken, PL[k-w], ..., PL[k-2], PL[k-1], PL [k], PL[k+1], ..., PL[k+u], unterteilt wird, wobei das Verfahren **dadurch gekennzeichnet ist, daß**:

   für jeden Nutzblock PL[i] in der Sequenz von Nutzblöcken ein Vorwärtsfehlerkorrekturcode FEC[i] erzeugt wird, der die XOR-Summe einer vorbestimmten Anzahl von vorangegangenen Nutzblöcken umfaßt, und daß der Vorwärtsfehlerkorrekturcode FEC [i] dem Nutzblock PL[i] angehängt wird, wobei die vorbestimmte Anzahl größer als eins ist,

   eine Sequenz von Paketen P[k], P[k+1], ..., P[k+u] von einer ersten Vorrichtung in dem Netzwerk zum Empfang durch eine zweite Vorrichtung in dem Netzwerk übertragen wird, wobei jedes Paket P[i] in der Sequenz von Paketen einen Nutzblock PL[i] und einen Vorwärtsfehlercode FEC[i] enthält.

18. Verfahren nach Anspruch 17, bei dem, wenn ein Paket P[j] bei der Übertragung verloren geht, die zweite Vorrichtung einen Nutzblock PL[j] durch einen Prozeß wiedererzeugt, der ein Extrahieren von Informationen aus einem oder mehr Paketen, die dem Paket P[j] folgen, umfaßt.

19. Verfahren nach Anspruch 18, bei dem die vorbestimmte Anzahl eine Länge eines Büschel- bzw. Burstfehlers definiert, von dem die zweite Vorrichtung die Nutzlast wiedergewinnen kann.

20. Verfahren nach Anspruch 19, bei dem die vorbestimmte Anzahl 2 ist.

21. Verfahren nach Anspruch 19, bei dem die vorbestimmte Anzahl 3 ist.

22. Verfahren nach einem der Ansprüche 17 bis 21, bei dem die Nutzlast ein Echtzeit-Mediensignal repräsentiert.

23. Verfahren nach Anspruch 22, bei dem die Nutzlast ein Sprachsignal repräsentiert.

24. Verfahren nach einem der Ansprüche 17 bis 23, das weiterhin **gekennzeichnet ist durch** die Verfahrensschritt in folgender Reihenfolge:

   Auffüllen einer Vielzahl der Nutzblöcke, um eine Vielzahl von aufgefüllten Nutzblöcken zu erzeugen, die untereinander die gleiche Länge haben, und
   Erzeugen der Vorwärtsfehlerkorrekturcodes für die aufgefüllten Nutzblöcke.

25. Verfahren nach einem der Ansprüche 17 bis 24 das weiterhin **gekennzeichnet ist durch** Anwenden eines Gleitfensters entlang der Sequenz von Nutzblöcken und **durch** Erzeugen und Anhängen der Vorwärtsfehlerkorrekturcodes innerhalb des Gleitfensters.

26. Verfahren zum Wiederherstellen eines verlorenen Paketes in einer Sequenz von Paketen, die in einem paketvermittelten Telekommunikationsnetzwerk übertragen werden, in dem Leitrechner Pakete basierend auf Informationen leiten, die in den Paketköpfen enthalten sind, wobei jedes Paket in der Sequenz eine Sequenzzahl definiert und einen Nutzblock und einen Redundanzblock trägt, wobei das Verfahren **gekennzeichnet ist durch**:

   (a) Empfangen eines eingehenden Paketes von der Sequenz aus Paketen,

(b) Einrichten eines Fensters zur Analyse beginnend mit dem eingehenden Paket und Verlängern bzw. Weitersenden der Sequenz, die dem eingehenden Paket folgt, für eine vorbestimmte Anzahl von Paketen, und

(c) wenn lediglich ein Nutzblock in dem Fenster zur Analyse nicht bis dahin empfangen wurde, Wiederherstellen des einen Nutzblockes **durch** Nehmen einer XOR-Summe von einer Vielzahl von Nutzblöcken innerhalb des Analysefensters.

27. Verfahren nach Anspruch 26, das weiterhin **gekennzeichnet ist durch**:

wenn alle der Nutzblöcke in dem Analysefenster empfangen wurden, oder wenn mehr als einer der Nutzblöcke in dem Analysefenster nicht empfangen wurde, Bewegen des Analysefensters zurück **durch** ein Paket, so daß das Analysefenster mit einem Paket der Sequenz vor dem eingehenden Paket ist und sich für die vorbestimmte Anzahl von Paketen des Paketes erstreckt, das dem einen Paket folgt, und Wiederholen des Schrittes (c) aus Anspruch 26.

28. Vorrichtung zum Übertragen einer Nutzlast in einem paketvermittelten Telekommunikationsnetzwerk, in dem Leitrechner Pakete basierend auf Informationen leiten, die in den Paketköpfen enthalten sind, wobei die Nutzlast in eine Sequenz von Nutzblöcken, PL[k-w], ..., PL[k-2], PL[k-1], PL[k], PL[k+1], ..., PL[k+u], unterteilt ist, wobei die Vorrichtung einen Computerprozessor und einen Speicher aufweist, und wobei die Vorrichtung **gekennzeichnet ist durch**:

ein erstes Segment zum Erzeugen eines Vorwärtsfehlerkorrekturcodes FEC[i] für jeden Nutzblock PL[i] in der Sequenz mit der XOR-Summe aus einer vorbestimmten Anzahl von vorstehenden Nutzblöcken und zum Anhängen des Vorwärtsfehlerkorrekturcodes FEC[i] an den Nutzblock PL[i], wobei die vorbestimmte Anzahl größer als eins ist, und

ein zweites Segment zum Übertragen einer Sequenz von Paketen P[k], P[k+1], ..., P[k+u] von einer ersten Vorrichtung in dem Netzwerk zum Empfangen **durch** eine zweite Vorrichtung in dem Netzwerk, wobei jedes Paket P[i] in der Sequenz von Paketen einen Nutzblock PL[i] und einen Vorwärtsfehlercode FEC[i] enthält.

29. Vorrichtung nach Anspruch 28, bei der das erste Segment einen Satz von Maschinensprachenbefehlen umfaßt, der in dem Speicher gespeichert ist und durch den Computerprozessor ausführbar ist.

30. Vorrichtung nach Anspruch 28 oder 29, die weiterhin **gekennzeichnet ist durch** ein drittes Segment, das **durch** die zweite Vorrichtung betätigt wird, zum Wiedererzeugen eines verlorenen Nutzblockes PL[j] **durch** einen Prozeß, der den Schritt des Extrahierens von Informationen aus einem oder mehr anderen Paketen in der Sequenz der Pakete umfaßt.

31. Vorrichtung nach Anspruch 30, bei der das dritte Segment einen Satz von Maschinensprachenbefehlen umfaßt, der in dem Speicher gespeichert ist und durch den Computerprozessor ausführbar ist.

32. Vorrichtung nach einem der Ansprüche 28 bis 31, bei der die vorbestimmte Anzahl eine maximale Anzahl von verlorenen Nutzblöcken in einer Reihe ist, die wiederhergestellt werden können.

33. Vorrichtung nach einem der Ansprüche 28 bis 32, bei der die Nutzlast ein Echtzeit-Mediensignal repräsentiert.

34. Vorrichtung nach Anspruch 33, bei der die Nutzlast ein Sprachsignal repräsentiert.

**Revendications**

1. Procédé de codage de paquets d'une séquence de blocs de charge utile pour permettre la récupération de paquets perdus dans un réseau de télécommunications à commutation de paquets, dans lequel des routeurs acheminent des paquets sur la base d'informations contenues dans les en-têtes de paquets, ladite séquence de blocs de charge utile comprenant un groupe séquentiel de $k$ blocs de charge utile et un groupe séquentiel ultérieur de blocs de charge utile, ledit procédé étant **caractérisé par** les étapes suivantes :

on obtient $p$ blocs de redondance dudit bloc séquentiel de $k$ blocs de charge utile, et

on génère $p$ paquets par un procédé comprenant la combinaison de chacun desdits p blocs de redondance, respectivement, avec un bloc de charge utile dans ledit groupe séquentiel ultérieur de blocs de charge utile, si bien que chacun desdits $p$ paquets comprendra un bloc de charge utile et l'un desdits $p$ blocs de redondance.

2. Procédé selon la revendication 1, dans lequel l'obtention des $p$ blocs de redondance comprend l'emploi d'un codeur de blocs de Reed-Solomon.

3. Procédé selon la revendication 1 ou 2, dans lequel ledit groupe séquentiel ultérieur de blocs de charge utile est constitué par les $k$ blocs de charge utile qui suivent dans la séquence après ledit groupe séquentiel de $k$ blocs de charge utile.

4. Procédé selon l'une quelconque des revendications précédentes, dans lequel lesdits blocs de charge utile représentent en coopération un signal de média en temps réel choisi dans le groupe constitué des médias audio et vidéo.

5. Procédé selon l'une quelconque des revendications précédentes, dans lequel $p$=1.

6. Procédé selon la revendication 5, dans lequel l'obtention d'un bloc de redondance depuis un groupe séquentiel de $k$ blocs de charge utile comprend le calcul d'une somme OU EXCLUSIF desdits $k$ blocs de charge utile.

7. Procédé selon la revendication 6, dans lequel lesdits groupes séquentiel ultérieurs de blocs de charge utile sont constitués par les $p$ blocs de charge utile qui suivent dans la séquence après ledit groupe séquentiel de $k$ blocs de charge utile.

8. Procédé selon l'une quelconque des revendications 1 à 4, **caractérisé en outre en ce que** l'on transmet lesdits $p$ paquets dans ledit réseau, lesdits $p$ paquets correspondant en séquence à ladite séquence desdits blocs de charge utile.

9. Appareil de codage de paquets d'une séquence de blocs de charge utile pour permettre la récupération de paquets perdus dans un réseau de télécommunications à commutation de paquets, dans lequel des routeurs acheminent des paquets sur la base d'informations contenues dans les en-têtes de paquets, ladite séquence de blocs de charge utile comprenant un groupe séquentiel de $k$ blocs de charge utile et un groupe séquentiel ultérieur de blocs de charge utile, ledit appareil ayant un processeur d'ordinateur et une mémoire, ledit appareil étant **caractérisé par** :

   un premier jeu d'instructions de langage machine stocké dans ladite mémoire et exécuté par ledit processeur pour otenir $p$ blocs de redondance dudit groupe séquentiel de $k$ blocs de charge utile; et
   un second jeu d'instructions de langage machine stocké dans ladite mémoire et exécuté par ledit processeur pour générer $p$ paquets par un procédé comprenant la combinaison de chacun desdits $p$ blocs de redondance, respectivement, avec un bloc de charge utile dans ledit groupe séquentiel ultérieur de blocs de charge utile, si bien que chacun desdits $p$ paquets comprendra un bloc de charge utile et l'un desdits $p$ blocs de redondance.

10. Appareil selon la revendication 9, dans lequel ledit premier jeu d'instructions de langage machine comprend un codeur de blocs de Reed-Solomon.

11. Appareil selon la revendication 9 ou 10, dans lequel ledit groupe séquentiel ultérieur de blocs de charge utile est constitué par les $k$ blocs de charge utile qui suivent dans la séquence après ledit groupe séquentiel de $k$ blocs de charge utile.

12. Appareil selon l'une quelconque des revendications 9 à 11, dans lequel lesdits blocs de charge utile représentent en coopération un signal de média en temps réel choisi dans le groupe constitué des médias audio et vidéo.

13. Appareil selon l'une quelconque des revendications 9 à 12, dans lequel $p$=1.

14. Appareil selon la revendication 13, dans lequel ledit premier jeu d'instructions de langage machine obtient un bloc de redondance d'un groupe séquentiel de $k$ blocs de charge utile en calculant une somme OU EXCLUSIF desdits $k$ blocs de charge utile.

15. Appareil selon la revendication 14, dans lequel ledit groupe séquentiel ultérieur de blocs de charge utile est constitué par les *p* blocs de charge utile suivant la séquence après ledit groupe séquentiel de *k* blocs de charge utile.

16. Appareil selon l'une quelconque des revendications 9 à 12, **caractérisé en outre par** un troisième jeu d'instructions de langage machine stocké dans ladite mémoire et exécuté par ledit processeur pour transmettre lesdits *p* paquets dans ledit réseau, lesdits *p* paquets correspondant en séquence à ladite séquence desdits blocs de charge utile.

17. Procédé pour communiquer une charge utile dans un réseau de télécommunications à commutation par paquets, dans lequel des routeurs acheminent des paquets sur la base d'informations contenues dans les en-têtes de paquets, ladite charge utile étant divisée en une séquence de blocs de charge utile, PL[k-w], ..., PL[k-2], PL[k-1], PL[k], PL[k+1], ..., PL[k+u], ledit procédé étant **caractérisé par** les étapes suivantes :

   pour chaque bloc de charge utile PL[i] dans ladite séquence de blocs de charge utile, on génère un code de correction d'erreur progressif FEC[i] comprenant la somme OU EXCLUSIF d'un nombre prédéterminé de blocs de charge utile précédents et on annexe ledit code de correction d'erreur progressif FEC[i] audit bloc de charge utile PL[i], ledit nombre prédéterminé étant supérieur à 1;
   on transmet une séquence de paquets P[k], P[k+1], ..., P[k+u] d'un premier dispositif dans ledit réseau pour réception par un deuxième dispositif dans ledit réseau, chaque paquet P[i] de ladite séquence de paquets comprenant un bloc de charge utile PL[i] et un code d'erreur progressif FEC[i].

18. Procédé selon la revendication 17, dans lequel, si un paquet P[j] est perdu dans la transmission, ledit deuxième dispositif recrée un bloc de charge utile PL[j] par un procédé comprenant l'extraction d'informations d'un ou plusieurs paquets qui suivent le paquet P[j].

19. Procédé selon la revendication 18, dans lequel ledit nombre prédéterminé définit une longueur d'erreur continue d'où ledit deuxième dispositif peut récupérer ladite charge utile.

20. Procédé selon la revendication 19, dans lequel ledit nombre prédéterminé est 2.

21. Procédé selon la revendication 19, dans lequel ledit nombre prédéterminé est 3.

22. Procédé selon l'une quelconque des revendications 17 à 21, dans lequel ladite charge utile représente un signal de média en temps réel.

23. Procédé selon la revendication 22, dans lequel ladite charge utile représente un signal vocal.

24. Procédé selon l'une quelconque des revendications 17 à 23, **caractérisé en outre par** les étapes suivantes dans l'ordre :

   on bourre une pluralité desdits blocs de charge utile pour créer une pluralité de blocs de charge utile bourrés de longueur égale l'un à l'autre; et
   on génère lesdits codes de correction d'erreur progressifs pour lesdits blocs de charge utile bourrés.

25. Procédé selon l'une quelconque des revendications 17 à 24, **caractérisé en outre en ce que** l'on applique une fenêtre glissante le long de ladite séquence de blocs de charge utile et, dans ladite fenêtre glissante, on génère et on annexe lesdits codes de correction d'erreur progressifs.

26. Procédé de récupération d'un paquet perdu dans une séquence de paquets transmise dans un réseau de télécommunications à commutation par paquets, dans lequel des routeurs acheminent des paquets sur la base d'informations contenues dans les en-têtes de paquets, chaque paquet de ladite séquence définissant un numéro de séquence et portant un bloc de charge utile et un bloc de redondance, ledit procédé étant **caractérisé par** les étapes suivantes :

   (a) on reçoit un paquet entrant de ladite séquence de paquets;
   (b) on établit une fenêtre d'analyse commençant par ledit paquet entrant et s'étendant sur un nombre prédéterminé de paquets de ladite séquence après ledit paquet entrant; et
   (c) si seulement un bloc de charge utile de ladite fenêtre d'analyse n'a pas été encore reçu, on récupère ledit bloc de charge utile en prenant une somme OU EXCLUSIF d'une pluralité de blocs de charge utile dans ladite fenêtre d'analyse.

**27.** Procédé selon la revendication 26, **caractérisé en outre en ce que**,

si tous les blocs de charge utile de ladite fenêtre d'analyse ont été reçus ou si plus de l'un desdits blocs de charge utile de ladite fenêtre d'analyse n'ont pas été reçus, on redéplace ladite fenêtre d'analyse d'un paquet de telle sorte que la fenêtre d'analyse se trouve un paquet de ladite séquence avant ledit paquet entrant et s'étende sur ledit nombre prédéterminé de paquets dudit paquet suivant ledit premier paquet; et

on répète l'étape (c) de la revendication 26.

**28.** Appareil de communication d'une charge utile dans un réseau de télécommunications à commutation par paquets, dans lequel des routeurs acheminent des paquets sur la base d'informations contenues dans les en-têtes de paquets, ladite charge utile étant divisée en une séquence de blocs de charge utile PL[k-w], ..., PL[k-2], PL[k-1], PL[k], PL[k+1], ..., PL[k+u], ledit appareil ayant un processeur d'ordinateur et une mémoire, ledit appareil étant **caractérisé par** :

un premier segment pour générer, pour chaque bloc de charge utile PL[i] de ladite séquence de blocs de charge utile, un code de correction d'erreur progressif FEC[i] comprenant la somme OU EXCLUSIF d'un nombre prédéterminé de blocs de charge utile précédents et annexer ledit code de correction d'erreur progressif FEC[i] audit bloc de charge utile PL[i], ledit nombre prédéterminé étant supérieur à un; et

un second segment pour transmettre une séquence de paquets P[k], P[k+1], ..., P[k+u] d'un premier dispositif dudit réseau pour réception par un second dispositif dudit réseau, chaque paquet P[i] de ladite séquence de paquets comprenant un bloc de charge utile PL[i] et un code d'erreur progressif FEC[i].

**29.** Appareil selon la revendication 28, dans lequel ledit premier segment comprend un jeu d'instructions de langage machine stocké dans ladite mémoire et exécutable par ledit processeur d'ordinateur.

**30.** Appareil selon la revendication 28 ou 29, **caractérisé en outre par** un troisième segment activé par ledit second dispositif pour recréer un bloc de charge utile perdu PL[j] par un procédé comprenant l'extraction d'informations d'un ou plusieurs autres paquets de ladite séquence de paquets.

**31.** Appareil selon la revendication 30, dans lequel ledit troisième segment comprend un jeu d'instructions de langage machine stocké dans ladite mémoire et exécutable par ledit processeur d'ordinateur.

**32.** Appareil selon l'une quelconque des revendications 28 à 31, dans lequel ledit nombre prédéterminé définit un nombre maximal de blocs de charge utile perdus dans une rangée qui peut être récupérée.

**33.** Appareil selon l'une quelconque des revendications 28 à 32, dans lequel ladite charge utile représente un signal de média en temps réel.

**34.** Appareil selon la revendication 33, dans lequel ladite charge utile représente un signal vocal.

| PL[1] | PL[2] | PL[3] | PL[4] | PL[5] | PL[6] | PL[7] | ..... | PL[k] | |

**Fig. 1**

**Fig. 2**

EP 1 040 611 B1

# Fig. 3

# Fig. 4

EP 1 040 611 B1

| PL[4] | FEC[4] | PL[5] | FEC[5] | PL[6] | FEC[6] | ..... | PL[k] | FEC[k] |

**Fig. 5**

FEC[6] = PL[5] ⊕ PL[4] ⊕     ⊕ PL[6-w]

FEC[k] = PL[k-1] ⊕ PL[k-2] ⊕     ⊕ PL[k-w]

# Fig. 6

EP 1 040 611 B1

| PACKET# | FEC # | | PACKET# | FEC # | | PACKET# | FEC # | | PACKET# | FEC # | | PACKET# | FEC # |

## Fig. 7

```
sequence                 data length        data          redundancy        redundancy
number      n    k                                         length
   ┌────┬────┬────┬────┬────┬────┬────┬────┬────┬────┬────┬────┬────┬────┬────┬────┬────┬────┐
   │ 11 │ 5  │ 4  │ 5  │ 0  │ 8  │ 4  │ 6  │ 2  │ 1  │ 7  │ 0  │ 7  │ 12 │ 10 │ 9  │ 4  │ 3  │ 10 │
   └────┴────┴────┴────┴────┴────┴────┴────┴────┴────┴────┴────┴────┴────┴────┴────┴────┴────┘
```

**Fig. 8**

Fig. 9

# Fig. 10

## Sequence of
## Windows of Analysis

| Step | Action | Window of Analysis |
|------|--------|--------------------|
| 1 | Recover lost data block 12 | 9 to 13 |
| 2 | Move window to bubbles 12-16 | 12 to 16 |
| 3 | No recovery | 11 to 15 |
| 4 | No recovery | 10 to 14 |
| 5 | No recovery | 9 to 13 |
| 6 | No recovery; Complete "inner loop" | 8 to 12 |
| 7 | No recovery | 7 to 11 |
| 8 | No recovery | 6 to 10 |
| 9 | No recovery; Complete "outer loop" | 5 to 9 |